Europäisches Patentamt

European Patent Office

Office européen des brevets

(19)

(11) Numéro de publication : **0 085 606**
**B1**

## (12) FASCICULE DE BREVET EUROPÉEN

(45) Date de publication du fascicule du brevet :
30.07.86

(21) Numéro de dépôt : 83400163.8

(22) Date de dépôt : 25.01.83

(51) Int. Cl.⁴ : **A 01 G 25/06**

(54) **Procédé d'irrigation contrôlée de terrains.**

(30) Priorité : 03.02.82 FR 8202110

(43) Date de publication de la demande :
10.08.83 Bulletin 83/32

(45) Mention de la délivrance du brevet :
30.07.86 Bulletin 86/31

(84) Etats contractants désignés :
BE CH DE GB IT LI

(56) Documents cités :
FR-A- 1 399 392
US-A- 2 850 843
US-A- 3 408 818
US-A- 3 552 654

(73) Titulaire : **Guisse, Francis**
**Route de Saint Venant**
**F-62190 Lillers (FR)**

(72) Inventeur : **Guisse, Francis**
**Route de Saint Venant**
**F-62190 Lillers (FR)**

(74) Mandataire : **Ecrepont, Robert**
**CABINET ECREPONT ROBERT 12, Place Simon Vollant**
**F-59800 Lille (FR)**

## Description

L'invention se rapporte à un procédé d'irrigation contrôlée d'un terrain, ainsi qu'à une installation d'irrigation équipant ledit terrain en vue de la mise en œuvre de ce procédé.

Elle s'applique notamment aux terrains engazonnés, tels les pelouses des parcs et plus particulièrement mais non exclusivement des terrains de sports dont principalement les terrains de football et de rugby.

La pelouse qui a un besoin d'eau qui varie selon les heures et les saisons, ne pourra satisfaire à sa demande qu'avec ce qu'elle trouvera comme fourniture instantanée dans le sol.

Il faut donc que le réapprovisionnement hydrique du sol suive le soutirage effectué par le végétal pour éviter un déséquilibre incontrôlé entre l'évaporation dans l'atmosphère et la succion dans le sol.

A l'inverse, une trop grande constance de l'humidité gêne les échanges gazeux dans la terre, et nuit à la structure des sols, surtout en surface où l'effet de piétinement associé à l'eau « ferme » le terrain et condamne le végétal à l'asphyxie.

On sait que, dans le sol, l'eau est soumise à des forces de gravité et de succion dont la résultante détermine son déplacement.

Lesdites forces de succion font en effet que l'eau est à la fois, d'une part, attirée par des particules qu'elle enveloppe et, d'autre part, soumise à des forces capillaires du fait qu'entre les agrégats, il existe des canalicules plus ou moins réguliers reliant entre elles de minuscules « vascuoles ».

Ces forces de succion varient évidemment en fonction de la grosseur des films et canalicules.

Elles peuvent s'annuler dans le cas où la granulométrie est trop importante, comme cela est recherché par exemple à l'aide des graviers et sables constituant généralement les couches drainantes des terrains de sports.

Le recours à ces déplacements naturels ne peut toutefois suffire pour obtenir en tous temps une pelouse de qualité uniforme pour laquelle, il est indispensable d'assurer, dès que le besoin s'en fait sentir, aussi bien l'évacuation des eaux excédentaires, par exemple, après une averse ou pour éviter les méfaits du gel, qu'à l'opposé l'apport de l'eau nécessaire, par exemple en période de sécheresse.

A ce jour, on connaît déjà des procédés tendant à éliminer l'eau excédentaire et/ou à apporter l'eau nécessaire.

Selon l'un de ces procédés (brevet français 2040416) l'évacuation de l'eau excédentaire est assurée par des drains noyés dans des tranchées remplies de graviers et/ou de sable alors que l'apport d'eau est assuré par un arrosage en surface. Selon un autre procédé connu (brevet français 2397491) l'évacuation de l'eau excédentaire est assurée par des drains noyés au fond de toute une couche drainante en gravier et/ou de sable en surface de laquelle, avant dépôt de la couche de terre arable, est placé un réseau de distribution d'eau.

Si ces procédés permettent de bien drainer les eaux en surface, ils nécessitent, notamment en été, des arrosages d'autant plus importants qu'une partie très notable de l'eau ainsi apportée est en contact direct avec le drain et s'élimine avant d'avoir pu profiter au terrain.

Un autre inconvénient majeur de ces procédés et moyens connus est qu'il est rare de rencontrer des sols dont la granulométrie est constante et cela provoque des irrégularités dans le déplacement naturel des eaux ce qui conduit évidemment aux mêmes irrégularités dans l'aspect de la pelouse.

Un résultat que l'invention vise à obtenir est un terrain dans lequel les déplacements de l'eau peuvent être contrôlés. Un autre résultat que l'invention vise à obtenir est un terrain dont, de ce fait, tout en étant suffisant, le réapprovisionnement en eau est modéré.

Sont également des résultats visés par l'invention, un procédé qui maintienne la structure matérielle des sols et les échanges gazeux qui s'y produisent et qui soit d'un prix de revient moins élevé que les procédés connus.

Pour cela, l'invention a pour objet un procédé d'irrigation contrôlée des sols selon lequel, d'une manière connue, on irrigue le terrain au moyen de tubes poreux sensiblement parallèles, enfouis dans le sol, et caractérisé en ce que entre les tubes poreux on réalise des fentes descendant depuis le niveau du sol jusqu'au-dessous du niveau des tubes poreux puis en ce qu'on remplit ces fentes de matériau de granulométrie suffisamment importante pour rompre l'effet de succion qu'offre naturellement le sol.

Elle a également pour objet une installation d'irrigation équipant un terrain pour la mise en œuvre du procédé.

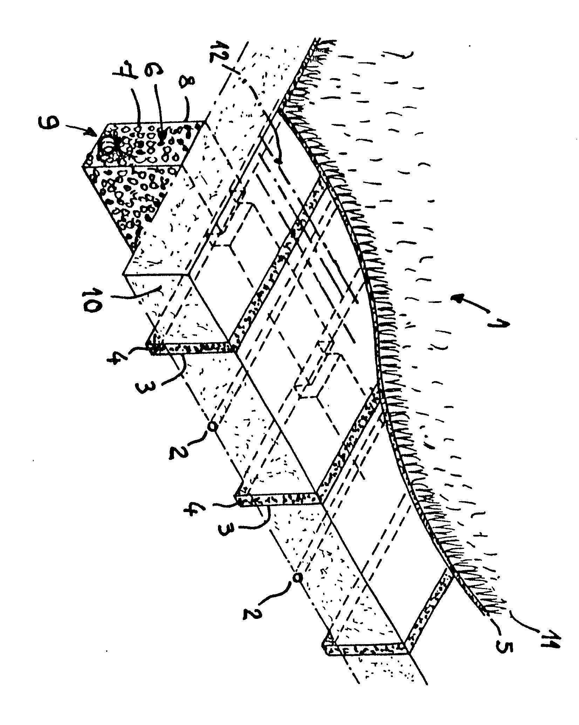

L'invention sera bien comprise à l'aide de la description ci-après faite, à titre d'exemple non limitatif, en regard du dessin ci-annexé qui représente schématiquement un terrain ainsi irrigué.

Selon le procédé de l'invention, on irrigue le terrain 1 au moyen de tubes poreux 2 sensiblement parallèles et enfouis dans le sol à environ vingt centimètres de profondeur et entre cinquante et quatre-vingt-dix centimètres de distance les uns des autres ; puis, entre ces tubes 2 et parallèlement à eux, on réalise dans le sol des fentes 3, descendant depuis le niveau du sol jusqu'au-dessous du niveau des tubes, et on les remplit de matériaux 4 de granulométrie suffisamment importante pour rompre l'effet de succion qu'offre naturellement le sol.

Ce matériau 4 sera par exemple du gravillon roulé d'une granulométrie deux/quatre.

Les fentes auront, par exemple, quatre centimètres de large et vingt-cinq à trente centimètres de profondeur.

Limitant ainsi les déplacements de l'eau dans le sol, ces fentes 3 permettent d'adapter l'irrigation aux besoins particuliers de chaque zone comprise entre deux fentes successives 3.

Elles permettent en plus d'évacuer depuis la surface les éventuelles eaux de pluie excédentaires et d'éviter la saturation en cas d'erreur de dosage de l'irrigation.

Pour accélérer cette évacuation, en surface du sol et en contact donc avec la tête des fentes 3, pourra être prévue une couche 5 d'environ quinze millimètres d'épaisseur de matériau de granulométrie d'environ zéro/trois tel un sable de rivière, de préférence non calcaire.

Dans le même but, les pieds des fentes recouperont sur une hauteur de cinq à dix centimètres environ les têtes des massifs de drainage 6 dont lesdites têtes se situeront sensiblement à vingt centimètres du niveau du sol.

Ces massifs 6 plus ou moins parallèles entre eux et espacés d'environ six à huit mètres seront par exemple constitués par remplissage de tranchées, jusqu'au niveau de leur tête, avec du gravillon 7, d'une granulométrie d'environ six/vingt.

Ces tranchées 8 descenderont à environ soixante centimètres de profondeur et recevront sur leur fond un drain 9 tel un tube souple en matière plastique d'environ cinquante millimètres de diamètre.

Il est évident que les drains des différents massifs sont alors raccordés à un collecteur tel un tube par exemple de cent millimètres de diamètre.

De manière connue, sous la couche superficielle 5 et sur une épaisseur d'environ quinze centimètres, le sol pourra être constitué d'un mélange 10 de terre arable et de quinze à trente pour cent de matériau à granulométrie de zéro/trois environ ce qui favorisera l'enracinement en profondeur et permettra à la plante d'atteindre la zone de stockage de l'eau.

Selon une caractéristique de l'invention, le tube d'irrigation 2 consistèra en un tube poreux en polyéthylène basse densité expansé dont les parois ont une structure mousseuse à cellules partiellement intercommunicantes dont la surface extérieure aura, lors de sa fabrication, été traitée spécialement, de façon à former une peau pratiquement imperméable et qui ensuite aura été travaillée pour ne laisser passer l'eau que de place en place et à un certain débit, par exemple de deux litres à l'heure par mètre linéaire, sous un bar de pression.

Chaque tube 2 est raccordé à une tête de ligne elle-même raccordée à un module de commande comprenant un régulateur de pression et une électrovanne actionnée par une sonde qui mesure le taux d'humidité.

Dans une variante de réalisation, on pose en bout des tubes 2, un collecteur d'évacuation avec une vanne par tête de ligne. On obtient ainsi un réseau ouvert qui permet de faire circuler de l'eau chaude l'hiver, et de maintenir le terrain hors gel. Pour éviter que l'eau sorte du tube 2, il suffit de limiter à deux ou trois dixièmes de bars sa pression.

Dans une autre variante de réalisation, et de préférence après quelques mois de pousse de la pelouse 11, des fentes 12, assurant un drainage de surface complémentaire, sont réalisées perpendiculairement aux fentes de suintement 3.

Elles s'étendent toutefois sur de très faibles largeur et profondeur et sont alors remplies de sable de rivière non calcaire de granulométrie zéro/six ou zéro/trois.

**Revendications**

1. Procédé d'irrigation contrôlée d'un terrain, selon lequel on irrigue le terrain au moyen de tubes poreux (2) sensiblement parallèles et enfouis dans le sol, caractérisé en ce que entre les tubes poreux parallèles (2), on réalise des fentes (3) descendant depuis le niveau du sol jusqu'au-dessous du niveau des tubes poreux (2), puis en ce qu'on remplit ces fentes (3) de matériaux (4) de granulométrie suffisamment importante pour rompre l'effet de succion qu'offre naturellement le sol.

2. Installation d'irrigation équipant un terrain, pour la mise en œuvre du procédé selon la revendication 1, comprenant des tubes poreux (2) sensiblement parallèles et enfouis dans le sol, caractérisé par le fait qu'elle comprend par ailleurs entre les tubes poreux (2) des fentes (3) descendant depuis le niveau du sol jusqu'au-dessous du niveau des tubes poreux (2), dans lesquelles fentes est présent un matériau (4) de granulométrie suffisamment important pour rompre l'effet de succion qu'offre naturellement le sol.

**Claims**

1. Method for the controlled irrigation of an area of land, wherein the land is irrigated by means of porous tubes (2) which are substantially parallel and which are buried in the soil, characterised in that gaps (3) are provided between the parallel porous tubes (2), which gaps penetrate from soil level to beneath the level of the porous tubes (2), and the said gaps (3) are filled with substances (4) of a sufficiently large granulometry to impede the suction effect which is naturally offered by the soil.

2. An irrigation installation equipping an area of land, for carrying out the method according to claim 1, comprising porous tubes (2) which are substantially parallel and which are buried in the soil, characterised in that, in addition, it comprises gaps (3) between the porous tubes (2), which gaps penetrate from soil level to beneath the level of the porous tubes (2), and in which is provided a substance (4) of a sufficiently large granulometry to impede the suction effect which is naturally offered by the soil.

**Patentansprüche**

1. Verfahren zum kontrollierten Bewässern von Gelände, nach welchem das Gelände mittels zweier paralleler perforierter Rohre (2) bewässert wird, die unter der Erde angeordnet sind, dadurch gekennzeichnet, daß zwischen den beiden parallelen perforierten Rohren (2) Spalte (3) ausgebildet werden, die sich von der Ebene des Bodens bzw. der Erde bis unter die Ebene der perforierten Rohre (2) erstrecken, und daß danach diese Spalte (3) mit einem Material (4) verfüllt werden, dessen Granulometrie ausreichend groß ist, um die natürliche Saugwirkung des Bodens bzw. der Erde aufzuheben.

2. System zur Bewässerung von Gelände, insbesondere durch die Durchführung des Verfahrens nach Anspruch 1, mit zwei parallelen perforierten Rohren (2), die unter der Erde angeordnet sind, dadurch gekennzeichnet, daß zwischen den beiden perforierten Rohren (2) Spalte (3) ausgebildet sind, die sich von der Ebene des Bodens bzw. der Erde bis unter die Ebene der perforierten Rohre (2) erstrecken, wobei in den Spalten Material (4) vorhanden ist, dessen Granulometrie ausreichend groß ist zur Aufhebung der natürlichen Saugwirkung des Bodens bzw. der Erde.